(19) Europäisches Patentamt

European Patent Office

Office européen des brevets

(11) **EP 1 087 622 A2**

(12) **EUROPÄISCHE PATENTANMELDUNG**

(43) Veröffentlichungstag:
28.03.2001 Patentblatt 2001/13

(51) Int. Cl.$^7$: **H04N 7/26**, H04N 5/14,
H04N 7/50

(21) Anmeldenummer: 00118554.5

(22) Anmeldetag: 26.08.2000

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **27.09.1999 DE 19946263**

(71) Anmelder:
**XSYS Interactive Research GmbH
78050 Villingen-Schwenningen (DE)**

(72) Erfinder:
• **Sostawa, Bernd
71083 Herrenberg (DE)**
• **Dannemann, Thomas
70806 Kornwestheim (DE)**

(74) Vertreter:
**Patentanwälte
Westphal, Mussgnug & Partner
Waldstrasse 33
78048 Villingen-Schwenningen (DE)**

(54) **Digitales Transcodiersystem**

(57)   Es wird ein digitales Transcodiersystem zum Empfang von Datenbitströmen einer ersten Bitrate (R1) und Ausgeben eines Datenbitstromes einer im Vergleich zur ersten Bitrate (R1) unterschiedlichen und insbesondere reduzierten, zweiten Bitrate (R2) vorgestellt. Dieses weist eine eingangseitige Decodiereinrichtung (10) und eine ausgangsseitige Codiereinrichtung (20) auf, welche aus der Reihenschaltung eines Quantisierers (21) zur Requantisierung von in der Decodiereinrichtung (10) dequantisierten Daten mit einem Requantisierungsfaktor (Q2), einem nachgeschalteten VLC-Codierer (22) und einem Ausgangspuffer (23) besteht. Erfindungsgemäß ist vorgesehen, daß zur Einstellung der zweiten Bitrate (R2) allein der Requantisierungsfaktor des Quantisierers (21) veränderbar ist und zwar nach Maßgabe von voreinstellbaren, geschätzten Einstellparametern.

FIG 9

## EP 1 087 622 A2

**Beschreibung**

Die Erfindung betrifft ein digitales Transcodiersystem zum Empfang von Datenbitströmen einer ersten Bitrate und Ausgeben eines Datenbitstromes einer im Vergleich zur ersten Bitrate unterschiedlichen und insbesondere reduzierten, zweiten Bitrate gemäß den Merkmalen des Oberbegriffs des Anspruchs 1.

Digitale Transcodiersysteme sind überall dort notwendig, wo Datenbitströme in ihrer Bitrate umkonvertiert werden, um beispielsweise über einen bandbreitenbegrenzten Übertragungskanal geschickt zu werden. Beispiele zur Transcodierung sind u.a. beschrieben in WO 97/49206 und DE 196 23 934 A1. Weitere Veröffentlichungen hierzu befinden sich in IEEE Transactions on Consumer Electronics, Vol. 44, No.1, February 1998, Seite 88 bis 98 in dem Artikel „Transcoder Architectures For Video Coding" und in IEEE International Conference On Imaging processing, Vol. 3, 1995, Seite 408 bis 411, in dem Artikel „Rate conversion Of MPEG Coded Video By RE-Quantization Process".

Ein Hauptanwendungsgebiet der digitalen Transcodierung liegt in der Verarbeitung von Videobitströmen. So sind z.B. auf einem DVD-Video Videobitströme (DVD: Digital Video Disc oder Digital Versatile Disc) nach dem MPEG-2-Videocodier-standard gespeichert. Die Bitströme besitzen eine Bitrate von z.B. bis zu 9,8 Mbit/s, wobei die Bitrate zeitlich konstant oder variabel sein kann. Für die Verteilung in bestimmten Übertragungskanälen, wie z.B. einem optischen Bus in Automobilen, ist diese maximale Bitrate jedoch zu hoch, da die Bussysteme nur eine begrenzte und meist konstante Bitrate zur Verfügung stellen. Die Anpassung der DVD-Technologie für die Anwendung im Automobil gelingt deshalb nur mit einem digitalen Transcodierer, der sowohl die mittlere Bitrate als auch die Bitratencharakteristik der Videobitströme verändert.

Auf der DVD-Video ist üblicherweise ein MPEG-2-Programmstrom gespeichert, der z.B. einen Videobitstrom, mehrere Audiobitströme, Untertitel- und Navigationsinformation enthält. Der Videobitstrom ist üblicherweise nach den Videocodierstandards MPEG-1 oder MPEG-2 datenreduziert und codiert. Da meist der Videocodierstandard MPEG-2 verwendet wird, zeigt die Tabelle 1 einige Eigenschaften des MPEG-2-Videobitstroms auf der DVD-Video.

Tabelle 1

| DVD-Video. Einige Eigenschaften des MPEG-2-Videobitstroms. | |
| --- | --- |
| Videocodierstandard | MPEG-2, Untermenge von Main Profile @ Main Level |
| | MPEG-2, Untermenge von Simple Profile @ Main Level |
| Maximale Bitrate | 9,8 Mbit/s |
| Bitratencharakteristik | Variable Bitrate (VBR), Konstante Bitrate (CBR) |
| Unterstützte Fernsehsysteme | PAL (625/50), NTSC (525/60) |
| Auflösung in Bildpunkten | PAL: 720 x 576, 352 x 288 |
| | NTSC: 720 x 480, 352 x 240 |
| Bildwiederholfrequenz | PAL: 25 Vollbilder/s |
| | NTSC: 29,97 Vollbilder/s |
| Maximale Bildgruppen-Länge (Group of pictures, GOP) | PAL: 15 Vollbilder |
| | NTSC: 18 Vollbilder |

Die Notwendigkeit der Anpassung der DVD-Technologie für den Einsatz im Automobil wird deutlich, wenn man die Eigenschaften des optischen Buses betrachtet, über den der Videobitstrom im Automobil verteilt wird. Für die Übertragung des Videobitstroms stellt der optische Bus nur eine Bitrate von 3 bis 4 Mbit/s bereit. Die bereitgestellte Bitrate ist zeitlich konstant, d. h., daß in jedem Zeitintervall gleicher Dauer die gleiche Datenmenge transportiert wird. Diese beiden Eigenschaften des Buses führen zu Anforderungen an den zu übertragenden Videobitstrom. Der Videobitstrom darf somit nur eine Bitrate von 3 bis 4 Mbit/s besitzen und die Bitrate muß zeitlich konstant sein. Vergleicht man die Anforderungen mit den Einträgen in der Tabelle 1, wird deutlich, daß der Videobitstrom auf der DVD-Video diese nicht erfüllt. Die mittlere und maximale Bitrate auf der DVD-Video sind zu hoch, da die Videobitströme eine Bitrate von bis zu 9,8 Mbit/s aufweisen dürfen. Darüber hinaus dürfen die Videobitströme auf der DVD-Video, neben einer konstanten (CBR) auch eine variable (VBR) Bitrate besitzen. Bitströme mit variabler Bitrate besitzen eine zeitlich stark schwankende Bitrate und können i. a. nicht mit einer konstanten Bitrate übertragen werden. Die Videobitströme auf der DVD-Video müssen daher in bezug auf das Bitratenniveau und die Bitratencharakteristik an die Eigenschaften des optischen Buses im Automobil angepaßt werden. Die Anpassung wird durch einen digitalen Transcodierer geleistet.

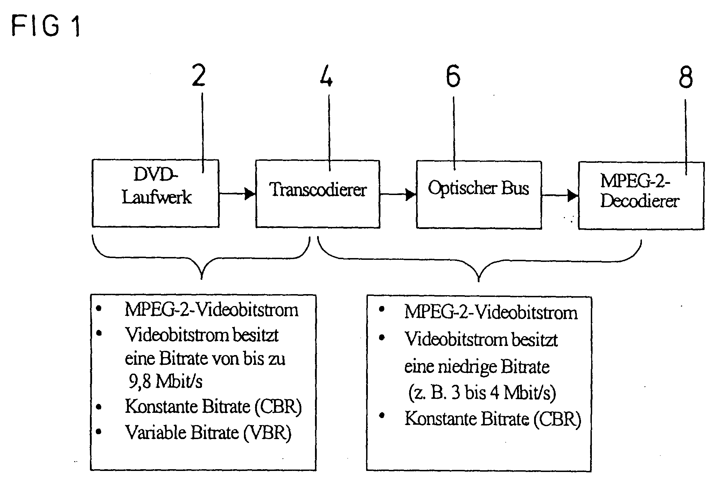

Fig.1 zeigt beispielhaft die resultierende Konfiguration für die Verteilung von Videobitströmen über einen optischen Bus im Automobil. Der digitale Transcodierer bildet, wie ersichtlich, die Schnittstelle zwischen zwei Bereichen mit unterschiedlichen Eigenschaften. Die Entwicklung eines Konversionsalgorithmus für den Transcodierer und die Implementierung des Algorithmus in einem Video-Prozessor-Plattform ist deshalb ziel unterschiedlicher Entwicklungsarbeiten.

Zwei Anforderungen an den Transcodierer wurden bereits im vorhergehenden Abschnitt formuliert und können aus Fig. 1 abgelesen werden. Der digitale Transcodierer muß die Bitrate des zugeführten Videobitstroms reduzieren und gegebenenfalls dessen Bitratencharakteristik verändern, so daß am Ausgang des Transcodierers ein CBR-Bitstrom mit einer definierten Bitrate anliegt.

Die erste Forderung besagt, daß Verfahren gefunden werden müssen, um die Datenmenge des zugeführten Videobitstroms nachträglich zu verringern. Die zweite Forderung wird durch eine Bitratenregelung erfüllt, die die oben gefundenen Verfahren so einsetzt, daß der transcodierte Videobitstrom die gewünschte konstante Bitrate besitzt.

Neben den oben genannten Anforderungen an die Funktionen des Transcodierers, existieren noch Anforderungen an die Art und Weise, wie diese Funktionen realisiert werden sollen. Die zusätzlichen Anforderungen an die Realisierung der Funktionen ergeben sich durch die beabsichtigte Verwirklichung mit einem Video-Prozessor. Um die Verwirklichung zu vereinfachen, soll der Transcodierungsalgorithmus nicht nur eine geringe Komplexität, sondern auch geringe Speicheranforderungen besitzen. Die durch die Bitratenregelung verursachte Verzögerungszeit soll so gering wie möglich sein, um die Laufzeit der Bitströme durch das System in Fig. 1 nicht allzu hoch werden zu lassen.

Schließlich muß natürlich die Bildqualität des transcodierten Videobitstroms berücksichtigt werden, denn davon hängt maßgeblich die Akzeptanz des Systems ab. Die Bildqualität soll unter Erfüllung der oben genannten Anforderungen so gut wie möglich sein. Gesucht ist ein Transcodierungsalgorithmus, der einen sinnvollen Kompromiß aus möglichst guter Bildqualität, möglichst geringem Aufwand und möglichst geringer Verzögerungszeit darstellt.

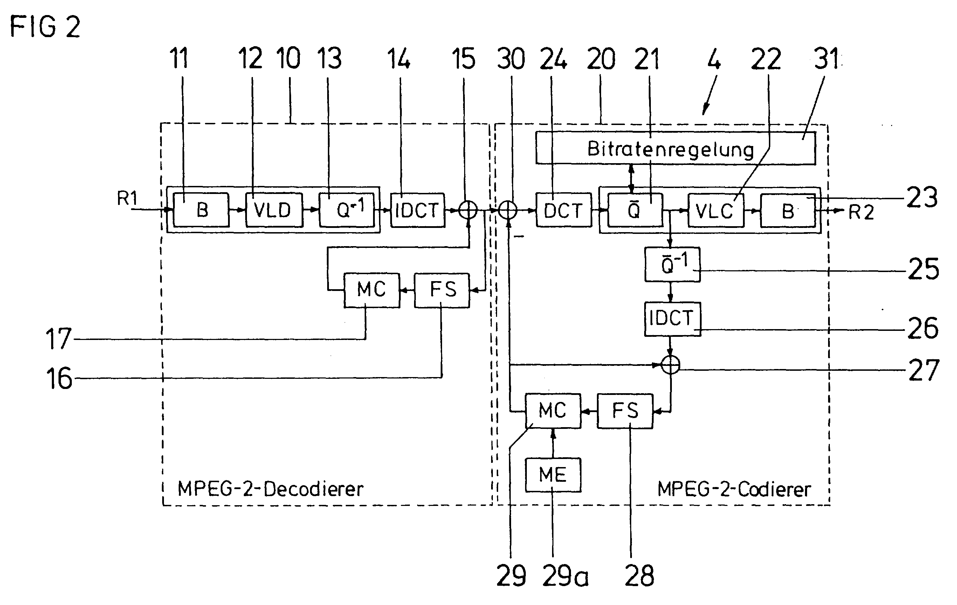

Eine bekannte Ausführungsform eines digitalen Transcodierers ist in dem eingangs genannten Artikel „Transcoder Architectures for Video Coding" auf Seite 3 in Zusammenhang mit dem dort dargestellten Blockschaltbild erläutert. Das Blockschaltbild ist vorliegend sinngemäß in Fig. 2 wiedergegeben. Der bekannte Transcodierer 4 besteht aus der Kettenschaltung eines vollständigen MPEG-2-Videodecodierers 10 und eines kompletten MPEG-2-Videocodierers 20. Der MPEG-2-Videodecodierer 10 weist die Reihenschaltung eines Eingangspuffers 11, eines VLC-Decodierers 12 (VLC: Code variabler Länge), eines Dequantisierers 13, einer Inverse-DCT-Stufe 14 (DCT: Diskrete Cosinus-Transformation) und einer nachfolgenden Additionseinheit 15 auf. Das Ausgangssignal der Additionsstufe 15 wird dem einen Eingang eines Addierers 30 des MPEG-2-Videocodierers 20 zugeführt und zugleich an einen Bildspeicher 16 mit nachgeschalteter Bewegungskompensationsstufe 17 einem zweiten Eingang der Additionsstufe 15 gelegt.

Der MPEG-2-Videocodierer 20 weist die Reihenschaltung einer DCT-Stufe 24, einem nachfolgenden Quantisierer 21 mit nachgeschalteten VLC-Codierer 22 und Ausgangspuffer 23 auf. Der Ausgang des Quantisiers 21 ist mit dem Eingang eines Dequantisierers 25 in Verbindung, an dessen Ausgang eine weitere IDCT-Stufe 26 angeschlossen ist. Deren Ausgang ist mit dem Eingang einer Addierstufe 27 in Verbindung. Der Ausgang der Addierstufe 27 ist über einen Bildspeicher 28 mit nachgeschalteter Bewegungskompensationsstufe 29 auf einen zweiten Eingang der Addierstufe rückgekoppelt sowie an einen zweiten Eingang des Addierers 30 geführt. Zusätzlich ist an die Bewegungskompensationsstufe 29 eine Bewegungsschätzungsstufe 29a gekoppelt.

Der zugeführte Videobitstrom wird mit einem solchen bekannten digitalen Transcodierer vollständig decodiert und anschließend vollständig neu codiert. Eine Bitratenregelungstufe 31 des MPEG-2-Codierers 20 stellt dabei den Quantisierer 21 so ein, daß die gewünschte niedrige konstante Zielbitrate erreicht wird.

Ein solcher Transcodierer erfüllt zwar die oben genannten Anforderungen an die Funktionen des gewünschten Transcodierers, jedoch ist der Implementierungsaufwand zu hoch. Durch die mehrmalige Berechnung der DCT und IDCT, die Bewegungskompensation und vor allem die Bewegungsschätzung ist die Komplexität viel zu hoch, um mit vernünftigen Aufwand in Hardwarerealisierung zu ermöglichen. Die Speicheranforderungen sind ebenfalls groß, da für die Durchführung der Bewegungskompensation jeweils zwei Bilder gespeichert werden müssen.

Eine Ursache für die große Komplexität des allgemeinen Transcodierers liegt in der fehlenden Kommunikation zwischen dem Decodierer und dem Codierer. Der Codierer kann auf die im Decodierer vorliegenden Codierungsparameter des Eingangsbitstroms nicht zugreifen und muß alle Codierungsparameter neu entscheiden. Insbesondere führt der Codierer eine erneute Bewegungsschätzung durch.

Die Komplexität und der Aufwand des allgemeinen Transcodierers lassen sich reduzieren, wenn nicht alle Codierungsparameter neu entschieden und die entsprechenden Parameter des Eingangsbitstroms genutzt werden. Je nach Anzahl und Wahl der aus dem Eingangsbitstrom übernommenen Codierungsparameter ergeben sich vereinfachte Transcodierer.

Ein bekannter vereinfachter digitaler Transcodierer ohne die in Fig. 2 dargestellte und oben beschriebene Rückkopplung besteht lediglich aus den grau unterlegten Blöcken in Fig.2 und ist z.B. aus Bild 2 von Seite 411 der eingangs genannten Veröffentlichung "Rate Conversion Of MPEG Coded Video By ReQuantization Process" bekannt. Eine adaptive Requantisierung und Bitratenregelung ist dadurch vorgesehen, daß der neue Requantisierungsfaktor als Produkt aus Basisquantisierungsfaktoren und dem Quotienten aus Eingangsquantisiserungsfaktoren Und mittleren Eingangsquantisierungsfaktoren bestimmt wird.

Dies ist problematisch, weil die Quantisierungsfaktoren mit den entsprechend, hohen Datenmengen in Beziehung gesetzt werden müssen.

Der vorliegenden Erfindung liegt die Aufgabe zugrunde, den eingangs genannten digitalen, nicht rückgekoppelt Transcodierer so zu verbessern, daß dieser in einer sehr einfachen Weise, ohne viel Speicherplatz bei der Implementierung zu benötigen, realisierbar ist.

Diese Aufgabe wird durch einen digitalen Transcodierer mit den Merkmalen des Anspruchs 1 gelöst.

Weiterbildungen sind Gegenstand der Unteransprüche.

Verwendungen eines solchen, erfindungsgemäßen Transcodierers sind Gegenstand der Ansprüche 16 bis 19.

Die Erfindung wird anhand eines Ausführungsbeipieles im Zusammenhang mit Figuren weiter näher erläutert. Es zeigen:

Fig.1    das bereits erläuterte Blockschaltbild für die Verteilung von Videobitströmen über einen optischen Bus in einem Automobil.

Fig.2    das bereits erläuterte Blockschaltbild eines bekannten digitalen Transcodierers,

Fig.3    ein Blockschaltbild eines erfindungsgemäßen, digitalen Transcodierers,

Fig.4    eine detailliertere Darstellung der Schaltungskomponenten des Blockschaltbildes von Fig. 3,

Fig.5    ein Diagramm, aus dem die Quantisierungsfaktoren QS im Eingangsbitstrom und im transcodierten Bitstrom bei einem konkreten Ausführungsbeipiel des digitalen Transcodierers von Fig. 3 bzw. Fig. 4 hervorgehen,

Fig.6    ein Diagramm, aus dem die Datenmenge D pro Bild im Eingangsbitstrom und transcodierten Bitstrom bei dem angegebenen, konkreten Ausführungsbeispiel hervorgeht,

Fig.7    ein Diagramm für das "Peak Signal-to-Noise-Ratio" (PSNR) bei dem mit dem erfindungsgemäßen Transcodierer erzeugten Bild als Maß für die Bildqualität,

Fig.8    ein Blockschaltbild einer Datenaufzeichnungseinrichtung, die den erfindungsgemäßen Transcodierer enthält, und

Fig.9    ein Blockschaltbild zur Realisierung einer Stufe eines Transcodierers, mit der der Dequantiserungs- und Quantisierungsvorgang in einem Schritt durchführbar ist.

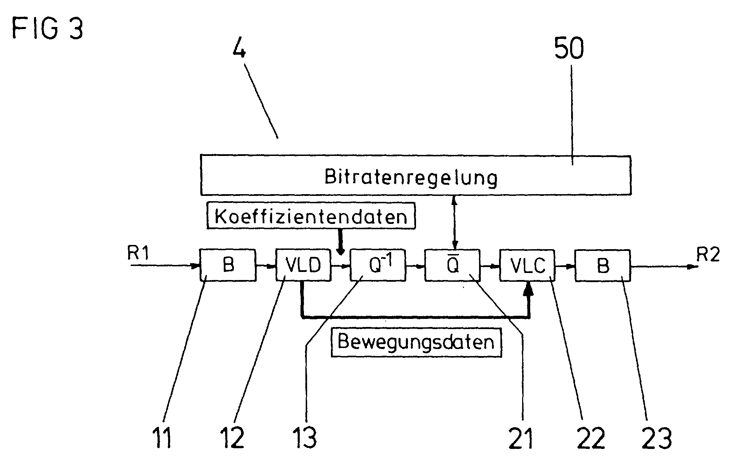

Das Blockschaltbild eines digitalen Trancodierers ohne Rückkopplung gemäß der Erfindung zeigt Figur 3. Eingangsseitig wird dem Transcodierer 4 ein erster Datenstrom R1 in einen Eingangspuffer 11 zugeführt. Dieser Eingangspuffer 11 dient zur Zwischenspeicherung eines Ausschnittes des Datenbitstroms R1. Ausgangsseitig ist der Eingangspuffer 11 mit einem VLD-Decodierer und Demultiplexer 12 in Verbindung, welcher ausgangsseitig wiederum an den Eingang eines Dequantisierers 13 gelegt ist. Der Ausgang des Dequantisierers 13 ist direkt mit dem Eingang eines nachgeordneten Quantisierers 21 in Verbindung, dessen Ausgang an einen VLC-Codierer gelegt ist. Ausgangsseitig ist der digitale Transcodierer 4 noch mit einem Ausgangspuffer 23 versehen. Am Ausgang des Ausgangspuffers 23 ist ein zweiter Datenbitstrom R2 abgreifbar, der beispielsweise im Vergleich zum eingangsseitigen Datenbitstrom R1 in seine Bitrate reduziert und konstant ist, während der empfangene Bitstrom R1 auch variabel in seiner Bitrate sein kann.

Wie Figur 3 weiter zeigt, werden Bewegungsdaten in dem VLC-Decodierer und Demultiplexer 12 direkt und unverändert an den VLC-Codierer 22 gegeben. Der Quantisierer 21 ist mit einer Bitratenregelungsstufe 50 in Verbindung, die erfindungsgemäß dafür sorgt, dass der ausgangsseitige Datenbitstrom R2 in seiner Bitrate konstant ist und eine vorgegebene Zielbitrate aufweist.

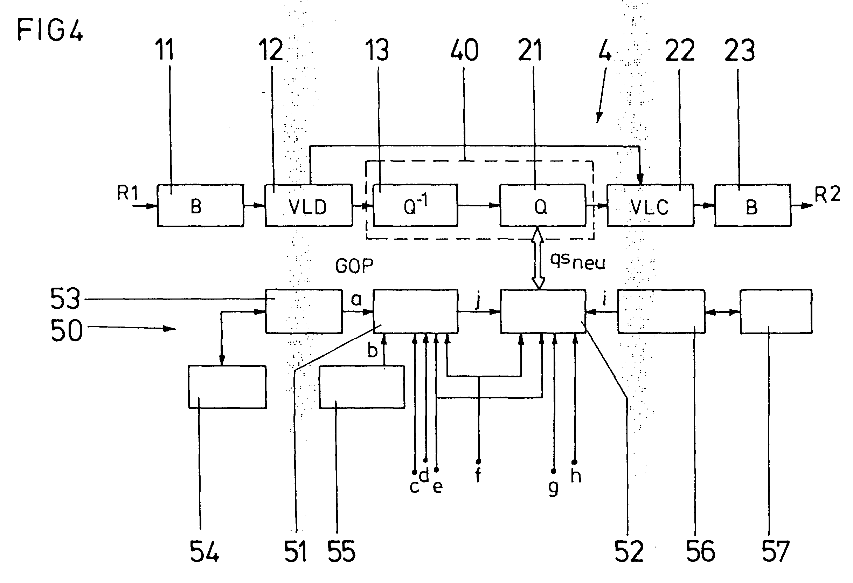

Bevor das in Figur 4 dargestellte, detailliertere Blockschaltbild eines Ausführungsbeispieles des digitalen Transcodierers nach der Erfindung erläutert wird, wird zunächst die Funktionsweise des rückkopplungsfreien Transcodierers gemäß Figur 3 vorgestellt.

Der Umfang der Koeffizientendaten hängt von der gewählten Quantisierung ab. Eine grobe Quantisierung mit einem großen Quantisierungsfaktor verkleinert die Datenmenge der Koeffizienten, da viele Koeffizienten zu Null quantisiert werden, d. h. wegfallen, und die verbleibenden Koeffizienten betragsmäßig klein werden. Wenige kleine Koeffizienten können in der VLC-Einheit effizient codiert werden und verursachen eine kleine Datenmenge.

Der hochratige Eingangsbitstrom R1 enthält fein quantisierte Koeffizienten. Die fein quantisierten Koeffizienten werden im Requantisierungsprozeß gröber quantisiert. Dadurch sinken die Datenmenge der Koeffizienten und die Bitrate des transcodierten Bitstroms. Wenn der Requantisierungsfaktor hinreichend groß gewählt wird, verschwinden alle Koeffizienten. Dieser Sonderfall wird im Transcodierungsvorgang erkannt und entsprechend dem MPEG-2-Standard in an sich bekannter Art und Weise behandelt.

Die Bitratenregelung im Transcodierer 4 sorgt dafür, daß der transcodierte Bitstrom die gewünschten Anforderungen an die mittlere und maximale Bitrate und die Bitratencharakteristik erfüllt; Der Requantisierungsfaktor ist hierfür das einzige Instrument der Regelung. Jede Bitratenregelung in einem Transcodierer besitzt eine Verzögerungszeit. Diese Eigenschaft soll anhand eines allgemeinen Modells einer Bitratenregelung erläutert werden. Die Bitratenregelung liest zunächst einen Ausschnitt des Eingangsbitstroms ein, um ihn zu analysieren. Dabei werden z. B. die Datenmenge der Koeffizienten pro Bild und die Quantisierungsfaktoren im Eingangsbitstrom ausgewertet. Erst nach der Analyse, also mit einer Verzögerungszeit, die dem gespeicherten Ausschnitt des Eingangsbitstroms entspricht, werden die gespeicherten Koeffizientendaten requantisiert. Da die Regelung im Transcoderier eine geringe Verzögerungszeit besitzen soll, darf nur ein kleiner Ausschnitt des Eingangsbitstroms zur Analyse zwischengespeichert werden. Um die Verzögerungszeit zu minimieren, verzichtet die Regelung im Transcodiere völlig auf eine Speicherung und Analyse des Eingangsbitstroms. Sie arbeitet daher auf Makroblock-Basis. Ein Makroblock ist ein Datenbereich im MPEG-2-Videobitstrom, der sowohl die Koeffizientenals auch die Bewegungsdaten eines nur 16 x 16 Bildpunkte großen Bildausschnittes enthält. Ein Makroblock wird aus dem Eingangsbitstrom eingelesen, ohne Verzögerung requantisiert und in den transcodierten Ausgangsbitstrom geschrieben.

Da die Bitratenregelung keine Voranalyse des Eingangsbitstroms durchführt, orientiert sie sich bei der Bestimmung des Requantisierungsftoren an der Datenmenge des bereits transcodierten Bitstroms und den zuletzt verwendeten Requantisierungsfaktoren. Für einige Einstellungsparameter der Regelung, die durch die fehlende Voranalyse nicht bekannt sind, müssen sinnvolle Schätzungen gebildet werden, die zweckmäßigerweise auf empirischen und statistischen Erhebungen beruhen.

Eins wesentliche Aufgabe der Bitratenregelung besteht darin, einen Eingangsbitstrom variabler Bitrate (VBR-Bitstrom) in einen transcodierten Bitstrom konstanter Bitrate (CBR-Bitstrom) umzuwandeln. Die Videobitströme auf der DVD-Video sind in der Regel VBR-Bitströme. VBR-Bitströme unterscheiden sich in einigen Punkten deutlich von CBR-Bitströmen. Wie der Name schon ausdrückt, besitzen VBR-Bitströme eine variable Bitrate über der Zeit. D. h., die für die Übertragung eines VBR-Bitstroms benötigte Bandbreite schwankt mit der Zeit. Dagegen benötigt ein CBR-Bitstrom zu allen Zeiten die gleiche Bandbreite, da die Bitrate über der Zeit konstant ist. Die Bitratencharakteristik spiegelt sich in der Datenmenge pro Bild wider. Ein VBR-Bitstrom besitzt eine sehr stark schwankende Datenmenge pro Bild. Einfache Bilder mit wenig Aktivität, z. B. Schwarzbilder, erzeugen eine sehr kleine Datenmenge, während komplizierte Bilder mit großer Aktivität, z. B. Sportaufnahmen mit schneller Bewegung, eine sehr große Datenmenge enthalten. In einem VBR-Bitstrom bekommt jedes Bild die Datenmenge zugeteilt, die eine sehr gute Bildqualität ermöglicht. Daher ist die Bildqualität von VBR-Bitströmen in der Regel konstant über der Zeit und ständig auf einem hohen Niveau. Ein CBR-Bitstrom ist der Einschränkung unterworfen, daß er zu jedem Zeitpunkt die gleiche Bitrate besitzen muß. Die Datenmenge pro Bild darf nur in dem Rahmen schwanken, so daß gerade noch eine konstante Bitrate eingehalten wird. Die Konsequenz ist, daß einfache Bilder mit relativ großer Datenmenge und komplizierte Bilder mit relativ kleiner Datenmenge codiert werden müssen. Die Bitratenregelung im erfindungsgemäßen Transcodierer 4 berücksichtigt die oben genannten Eigenschaften des VBR-Eingangsbitstroms und erzeugt einen transcodierten Bitstrom, der den CBR-Eigenschaften genügt.

In Figur 4 ist ein im Vergleich zum Blockschaltbild von Figur 3 detaillierteres Schaltbild gezeigt. Die Bitratenregelungsstufe 50 besteht aus einer Reihe von Schaltungsblöcken 51 bis 57, denen noch zu erläuternde Signale bzw. Einstellparameter a) bis j) zugeführt werden, um den Requantisierungsfaktor in der Quantisierungsstufe 21 so zu regeln, dass der ausgangsseitige Datenbitstrom R2 eine vorher bestimmte, konstante Zielbitrate aufweist.

Die Bitratenregelungsstufe 50 weist eine Bit-Allocation-Stufe 51 zur Ermittlung der Zieldatenmenge für ein Bild auf. Diese Stufe 51 ist mit einer Schätzungsstufe 53 in Verbindung. Die Schätzungsstufe 53 stellt der Bit-Allocations-Stufe 51 geschätzte Einstellparameter a für Bildgruppen (=GOP) zur Verfügung. Die Schätzwerte können beispielsweise die GOP-Länge und/oder GOP-Struktur beinhalten. Eine Überprüfungseinheit 54 ist an die Schätzstelle 53 gekoppelt und überprüft die Schätzungen anhand der Informationen im empfangenen Datenbitstrom R1. Ein weiteres Signal b wird der Bit-Allocations-Stufe 51 durch eine Schnitterkennungsstufe 55 bereitgestellt. In dieser Schnitterkennungsstufe 55 werden Bild- bzw. Szenenschnitte detektiert. Als weitere Signale erhält die Bit-Allocations-Stufe 51 eine Information über die Anzahl von Bits, die bei der Transcodierung des letzten Bildes erzeugt wurden (=Signal c) und eine Information über den Mittelwert der Requantisierungsfaktoren des letzten Bildes (=Signal d). Schließlich werden der Bit-Allocations-Stufe 51 noch Informationen über die Zielbitrate (=Signal e) und die Bildwiederholfrequenz (=Signal f) zugeführt.

Aus den Signalen a bis f erzeugt die Bit-Allocations-Stufe 51 ein Signal j für die Zieldatenmenge eines Bildes und führt dieses einer sogenannten Rate-Control-Stufe 52 zu. Diese Rate-Control-Stufe 52 steht direkt mit dem Quantisierer 21 des Transcodierers 4 in Verbindung und stellt dem Quantisierer 21 des Transcodierers 4 die Requantisierungsfaktoren für jeder Makroblock im Bild zur Verfügung. Hierfür wird der Rate-Control-Stufe 52 neben der Zieldatenmenge j zusätzlich eine Information über die Bildwiederholfrequenz und Zielbitrate (Signale e und f) zur Verfügung gestellt. Darüber hinaus erhält die Rate-Control-Stufe 52 ein Informationssignal g über die Anzahl der Makroblöcke pro Bild (Signal g) sowie ein Informationssignal über die Anzahl von Bits, die bei der Trancodierung der einzelnen Markorblöcke erzeugt wurden (Signal h). Schließlich erhält die Rate-Control-Stufe 52 noch eine Signal i aus einer Überwachungseinheit 56, die mit einem VBV-Speicher 57 in Verbindung steht. Das Signal i zeigt an, dass der VBV-Speicher (VBV: Video-Buffering-Verifier) 57 weder über- noch leergelaufen ist. Der Bit-Allocations-Stufe 51 werden Schätzwerte für die GOP-Länge und den Aufbau einer Bildgruppe (GOP-Struktur) zur verfügung gestellt. Dies ist nötig, damit die Bit-Allocations-Stufe 51 einen sinnvollen Wert für die Zieldatenmenge eines Bildes berechnen kann.

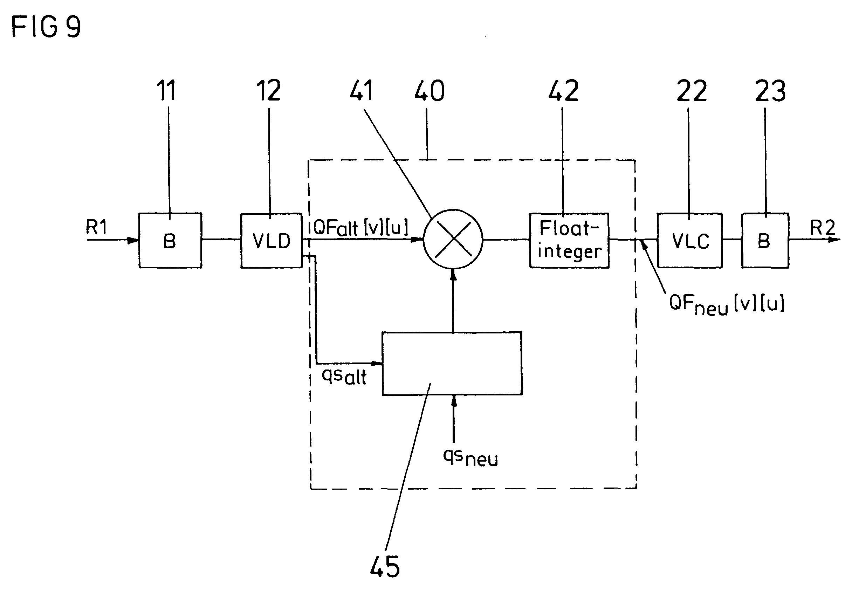

Wie in dem Blockschaltbild von Figur 4 bereits strichliert angedeutet, kann der Dequantisierer 13 und Quantisierer 21 durch eine gemeinsame Stufe 40 ersetzt sein. Ein Beispiel für eine solche gemeinsame Stufe 40 ist in Figur 9 dargestellt. Die gemeinsame Stufe 40 verfügt über einen Multiplizierer 41, dem aus dem VLD-Decodierer und Demultiplexer 12 die Koeffizientendaten $QF_{alt}$ und das Divisionsergebnis aus der Division der alten Requantisierungsfaktoren $qs_{alt}$ zu den neuen Requantisierungsfaktoren $qs_{neu}$ zugeführt wird. Die Division von $qs_{alt}$ zu $qs_{neu}$ erfolgt in einem Dividierer 45. Die neuen Requantisierungsfaktoren $qs_{neu}$ werden, wie im Zusammenhang mit Figur 4 erläutert über die Bitregelungsstufe 50 oder manuell, zur Verfügung gestellt. Der alte Requantisierungsfaktor $qs_{alt}$ wird direkt aus dem VLD-Decodierer und Demultiplexer 12 dem Dividierer 45 zugeleitet. Der Ausgang des Multiplizierers 41 ist mit einer Float-Integer-Umwandlungsstufe 42 in Verbindung, an deren Ausgang die neuen Koeffizientendaten $QF_{neu}$ bereitstehen und dem Eingang des VLC-Codierers 22 zugeleitet werden.

Mit dieser Schaltungsanordnung werden also die Quantisierungs- und Requantisierungsfaktoren nicht unabhängig voneinander in zwei Schritten bestimmt, sondern zusammen in einem Schritt. Die Quantisierung der DCT-Koeffizienten, also Koeffizientendaten, wird durch die Quantisierungsmatrix und den Quantisierungsfaktor qs bestimmt. Die Quantisierungsmatrix enthält für jeden der 64 DCT-Koeffizienten eines Blockes einen Wert. Der Quantisierungsfaktor qs ist konstant für alle Blöcke und damit auch für alle Koeffizienten eines Makroblocks. Ein Kennzeichen des erfindungsgemäßen Requantisierungsprozesses ist, dass die Quantisierungsmatrix nicht verändert wird. Der transkodierte Bitstrom enthält dieselben Quantisierungsmatrizen wie der Eingangsbitstrom R1. Da die Quantisierungsmatrizen unverändert bleiben, enthält die Requantisierungsformel gemäß

$$QF_{neu}[v][u] = QF_{alt}[v][u] \cdot \frac{qs_{alt}}{qs_{neu}} .$$

keine Elemente der Quantisierungsmatrizen. Da der Quotient $qs_{alt}/qs_{neu}$ für alle DCT-Koeffizienten eines Makroblocks konstant ist, muß er konsequenterweise nur einmal pro Makroblock berechnet werden und auch nur dann, wenn sich $qs_{alt}$ oder $qs_{neu}$ im Vergleich zum vorhergehenden Makroblock verändert haben. Die neuen Koeffizientendaten $QS_{neu}$ wird durch bloße Multiplikation mit dem Qutienten aus $qs_{alt}/qs_{neu}$ mit den alten Koeffizientendaten $QF_{alt}$ berechnet. Die Multiplikation muß vorteilhaferweise nur dann ausgeführt werden, wenn $QF_{alt}$ ungleich Null ist.

Die oben genannte Requatisierungsformel zeigt ihren vollen Nutzen dann, wenn der Aufwand an Rechenoperationen minimiert werden soll, wie dies bei Hardware-Realisierungen der Fall ist. Die oben genannte Requantisierungsformel verursacht nur höchstens eine Division pro Makroblock und höchstens eine Multiplikation pro DCT-Koeffizient.

Der Transcodierungsalgorithmus für den Transcodierer mit Bitratenregelung wurde gemäß den obigen Ausführungen entwickelt und untersucht. Die Funktionsfähigkeit des Algorithmus wird anhand eines Beispiels gezeigt. Die bekannte Bildtestsequenz mit dem Namen „Susie" (Anm.: diese Testsequenz zeigt eine Dame am Telefon) besitzt eine Auflösung von 720 x 576 Bildpunkten und eine Bildwiederholfrequenz von 25 Hz. Ein MPEG-2-Codierer wird so konfiguriert, daß er daraus einen Videobitstrom mit einer mittleren Bitrate von 6 Mbit/s erzeugt. Dieser Bitstrom wird an den Eingang des Erfindungsgemäßen Transcodierer gelegt und auf 3 Mbit/s transcodiert. Der transcodierte Bitstrom am Ausgang des Erfindungsgemäßen Transcodierer besitzt, wie gewünscht, eine konstante Bitrate. Die gewählten Bitraten sind typisch für die gegebene Problemstellung, können jedoch auch anders gewählt werden. Obwohl die DVD-Video eine maximale Bitrate von 9,8 Mbit/s zuläßt, beträgt die mittlere Bitrate der auf ihr gespeicherten VBR-Bitströme nur 6 Mbit/s oder darunter. Die Reduktion der Datenmenge im erfindungsgemäßen Transcodierer gelingt durch Requantisierung mit einem groben Quantisierungsfaktor.

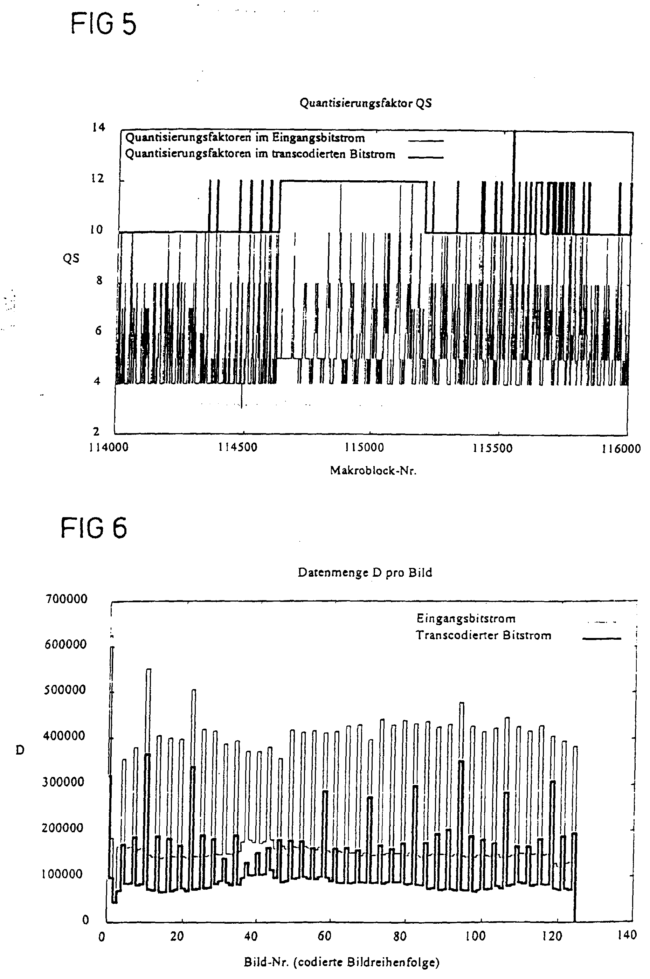

Fig.5 veranschaulicht den Requantisierungsvorgang. Mit QS ist auf der Senkrechten des Diagrammes der Quantisierungsfaktor QS im Eingangsbitstrom (schwach gezeichneter Kurvenverlauf) und im transcodierten Bitstrom (fett gezeichneter Kurvenverlauf) aufgetragen. Auf der waagrechten sind die fortlaufenden Makroblöcke dargestellt. Es ist deutlich erkennbar, daß durch den Requantisierungsvorgang die Quantisierungsfaktoren im transcodierten Bitstrom größer als im Eingangsbitstrom sind. Der Eingangsbitstrom enthält relativ kleine Quantisierungsfaktoren. Um die Bitrate des Eingangsbitstroms von 6 auf 3 Mbit/s zu reduzieren, werden im Requantisierungsvorgang die Quantisierungsfaktoren erhöht.

Dies entspricht einer gröberen Quantisierurig. Die Kurve, die die Quantisierungsfaktoren im transcodierten Bitstrom darstellt, verläuft daher oberhalb der Kurve, die die Quantisierungsfaktoren im Eingangsbitstrom wiedergibt. Die gröbere Quantisierung im transcodierten Bitstrom, und damit die kleinere Bitrate, spiegelt sich in der Datenmenge pro Bild wider.

Fig.6 zeigt, daß die einzelnen Bilder im transcodierten Bitstrom eine kleinere Datenmenge als im höherratigen Eingangsbitstrom besitzen. Der transcodierte Bitstrom besitzt aufgrund seiner kleineren Bitrate auch eine kleinere Datenmenge pro Bild, wie anhand der fett gezeichneten Kurve ersichtlich ist. Im dargestellten Diagramm ist die Datenmenge D pro Bild im Eingangsbitstrom und transcodierten Bitstrom aufgetragen.

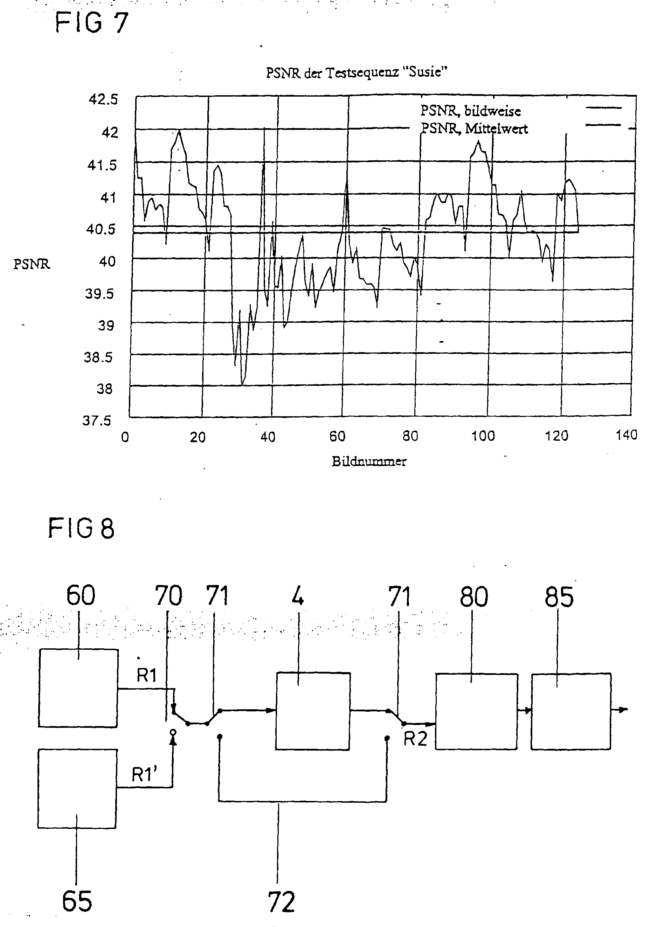

Um die Bildqualität des transcodierten Bitstroms beurteilen zu können, wird das sogenannte „Peak Signal-to-Noise Ratio" (PSNR) berechnet. Ein größeres PSNR steht in der Regel für eine bessere Bildqualität. Das PSNR des transcodierten Beispiel-Bitstroms ist in Fig.7 dargestellt. Dabei werden sowohl das PSNR für jedes Einzelbild als auch der Mittelwert über die gesamte Sequenz gezeigt. Der mit dem erfindungsgemäßen Transcodierer auf 3 Mbit/s transcodierte Bitstrom besitzt ein mittleres PSNR von 40,39 dB. Um diesen Wert beurteilen zu können, wird derselbe Eingangsbitstrom wie oben mit dem allgemeinen Transcodierer in Bild 2 auf 3 Mbit/s transcodiert und das PSNR berechnet. Der mit dem allgemeinen Transcodierer auf 3 Mbit/s transcodierte Bitstrom besitzt ein mittleres PSNR von 40,35 dB. Der erfindungsgemäße Transcodierer liefert somit ungefähr die gleiche Bildqualität wie der allgemeine Transcodierer. Dieses Ergebnis ist sehr positiv, denn es besagt, daß der erfindungsgemäßen Transcodierer, trotz der geringeren Komplexität und den geringeren Speicheranforderungen nahezu die gleiche Leistungsfähigkeit wie der allgemeinen Transcodierer besitzt und, wie sich gezeigt hat, in manchen Fällen sogar besser ist. Der extrem hohe Realisierungsaufwand des Transcodierers von Fig. 2 kann somit vermieden werden. Die Ergebnisse des Beispiels sind repräsentativ und lassen sich anhand anderer Testsequenzen und Bitraten reproduzieren.

Die Anforderungen an den erfindungsgemäßen Transcodierer berücksichtigen die möglichst einfache Verwirklichung mit einem Video-Prozessor. Die vorhergehenden Erläuterungen haben gezeigt, daß der erfindungsgemäße Transcodierer nicht nur diese Anforderungen erfüllt, sondern auch eine Bildqualität liefert, die mit dem bekannten, sehr aufwendigen Transcodierer von Fig. 2 vergleichbar ist. Daher ist die Verwirklichung des erfindungsgemäßen Transcodierers durch einen Video-Prozessor mit geringen Speicheraufwand möglich und z.B. in einem optischen Bussystem innerhalb eines Kfz realiserbar.

Der Eingangsbitstrom wird stückweise in den Eingangspuffer 11 geschrieben. Die VLD-Einheit 12 zerlegt den Eingangsbitstrom R1 in seine Syntaxelemente und decodiert hierzu die Codewörter mit variabler Länge. Von den Syntaxelementen werden nur diejenigen weiterverarbeitet, die Koeffizientendaten kennzeichnen. Unter Koeffizientendaten werden die mit der diskreten Cosinus-Transformation (DCT) in den Frequenzbereich transformierten Bildpunkte aller Bilder verstanden. Die Koeffizientendaten werden dequantisiert ($Q^{-1}$) und anschließend dem Requantisierungsprozeß ($\overline{Q}$) unterzogen. Die Bitratenregelung regelt den Requantisierungsfaktor, so daß der transcodierte Bitstrom am Ausgang die gewünschte niedrige konstante Bitrate besitzt. Die requantisierten Koeffizientendaten werden in der VLC-Einheit 22 in Codewörter umgesetzt. Die VLC-Einheit 22 fügt ebenso die unveränderten Bewegungsdaten aus dem Eingangsbitstrom R1 in den transcodierten Bitstrom ein. Der vollständige transcodierte Bitstrom wird in dem Ausgangspuffer 23 gespeichert und ausgegeben. Der erfindungsgemäße Transcodierer besitzt eine geringe Komplexität, da er im Vergleich zum allgemeinen Transcodierer in Bild 2 keine Transformationen (IDCT, DCT), keine Bewegungkompensation (MC) in einer Rückkopplungsschleife und keine Bewegungsschätzung (ME) durchführt. Da auf die Bewegungskompensation verzichtet wird, benötigt der erfindungsgemäßen Transcodierer keine Bildspeicher (FS). Die Speicheranforderungen sind somit gering. Die Bitratenregelung arbeitet mit geringer Verzögerungszeit. Damit erfüllt der erfindungsgemäße Transcodierer alle Anforderungen, die für eine vorteilhafte Verwirklichung mit einem Video-Prozessor nötig sind.

In Fig. 8 ist ein konkretes Anwendungsbeispiel für den digitalen Transcodierer im Blockschaltbild dargestellt. Der Transcodierer 4 wird in einem digitalen Videoaufzeichnungssystem zur Aufzeichnung von digitalen Daten auf einem Speichermedium 80 mit einem Datenbitstrom R2 konstanter Bitrate, die von der Bitrate des empfangenen Datenbitstroms R1 unabhängig ist, eingesetzt. Hierfür ist der Transcodierer 4 eingangsseitig an eine digitale Videoquelle, z. B. eine digitale Video-Disk 65 oder eine Signalquelle 60, an der ein digitales Video-Broad-Casting-Signal (DVBS, DVBC, DVBT) bereitgestellt wird, angeschlossen. Über einen Schalter 70 kann die entsprechende Signalquelle 60 oder 65 ausgewählt werden. Über eine Umschalteinrichtung 71 können die Signale der Signalquellen 60 bzw. 65 direkt über eine Verbindungsleitung 72 auf das Speichermedium 80 oder bitratenreduziert, wenn sich die Schalter der Umschalteinrichtung 71 in der in Figur 8 dargestellten Stellung befinden, gespeichert werden. In dieser Schalterstellung wird der empfangene Datenbitstrom R1 bzw. R1' über den Transcodierer 4 geführt und bitratenreduziert sowie eine konstante Bitrate aufweisend auf das Speichermedium 80 gespeichert. In der in Figur 8 dargestellten Schalterstellung kann eine „Longplay-Aufnahmefunktion" erreicht werden, da das Speichermedium 80 bitratenreduzierte Speicherdaten erhält. Die Aufnahmedauer bzw. Aufzeichnungsdauer des Speichermediums 80, das beispielsweise ein Magnetband oder ein Halbleiterspeicher sein kann, ist damit durch den erfindungsgemäßen Transcodierer 4 wesentlich erhöht.

Der wesentliche Vorteil des Einsatzes des Transcodierers 4 zur Aufzeichnung von Daten besteht darin, dass am Ausgang des Transcodierers 4 auf jeden Fall eine konstante Bitrate zur Verfügung steht, unabhängig davon, ob die eingangsseitigen Datenbitströme variabel oder konstant sind.

Ausgangsseitig kann man das Speichermedium 80 ein Decodierer 85, z. B. ein MPEG-2-Decodierer, angeschlossen sein. Darüber hinaus ist es auch möglich, den Transcodierer 4 so einzusetzen, dass er im Aufnahmemodus ein Transcodierungsprogramm und im Wiedergabemodus ein Decodierungsprogramm durchführt. Dies ist mikroprozessorgesteuert möglich.

**Patentansprüche**

1.   Digitales Transcodiersystem zum Empfang von Datenbitströmen einer ersten Bitrate (R1) und Ausgeben eines Datenbitstromes einer im Vergleich zur ersten Bitrate (R1) unterschiedlichen und insbesondere reduzierten, zweiten Bitrate (R2), mit einer eingangseitigen Decodiereinrichturig (10) und einer ausgangsseitigen Codiereinrichtung (20), welche die Reihenschaltung eines Quantisierers (21) zur Requantisierung von in der Decodiereinrichtung (10) dequantisierten Daten mit einem Requantisierungsfaktor (Q2), einen nachgeschalteten VLC-Codierer (22) sowie einen Ausgangspuffer (23) aufweist,
dadurch gekennzeichnet, daß zur Einstellung der zweiten Bitrate (R2) allein der Requantisierungsfaktor des Quantisierers (21) veränderbar ist und zwar nach Maßgabe von voreinstellbaren, geschätzten Einstellparametern.

2.   Digitales Transcodiersystem nach Anspruch 1,
dadurch gekennzeichnet, daß die geschätzten Einstellparameter empirisch und/oder statistisch ermittelt und in einer Speichereinrichtung (53) abgelegt sind.

3.   Digitales Transcodiersystem nach Anspruch 1 oder 2,
dadurch gekennzeichnet, daß die Einstellparameter nach Maßgabe der erwarteten Länge und/oder Struktur von Bildgruppen (GOP) im empfangenen Datenbitstrom (R1) voreingestellt sind.

4.   Digitales Transcodiersystem nach einem der Anspruch 1 bis 3,
dadurch gekennzeichnet, daß die voreinstellbaren, geschätzten Einstellparameter anhand des empfanenen Datenbitstromes (R1) überprüft und bei Bedarf korregierbar sind.

5.   Digitales Transcodiersystem nach einem der Ansprüche 1 bis 4,
dadurch gekennzeichnet, daß das Transcodiersystem (4) Makroblock-orientiert arbeitet und die Requantisierung ebenfalls Makroblock-bezogen erfolgt.

6.   Digitales Transcodiersystem nach Anspruch 5,
dadurch gekennzeichnet, daß der Requantisierungsfaktor zusätzlich nach Maßgabe der Anzahl von Bits, die bei der Transcodierung der einzelnen Makroblöcke erzeugt wurden, veränderbar ist.

7.   Digitales Transcodiersystem nach einem der Ansprüche 1 bis 4,
dadurch gekennzeichnet, daß eine Einrichtung (51) vorgesehen ist zur Ermittlung einer Zieldatenmenge (j) pro Bild, und daß diese Einrichtung (51) mit einer Szenenschnitterkennungseinrichtung (55), welche Szenenschnitte im Bild detektiert, in Verbindung steht sowie als weitere Stellgrößen ein Mittelwert für die Requantisierungsfaktor eines unmittelbar vorherigen Bildes und ein Wert für die Anzahl der Bits, die bei der Transcodierung des vorherigen Bildes des gleichen Bildtyps erzeugt wurden, zugeführt werden.

8.   Digitales Transcodiersystem nach einem der Ansprüche 1 bis 7,
dadurch gekennzeichnet, daß der Requantisierungsfaktor zusätzlich nach Maßgabe der Anzahl von vorhandenen Makroblöcken pro Bild sowie der Bildwiederholfrequenz im empfangenen Datenbitstromes veränderbar ist.

9.   Digitales Transcodiersystem nach einem der Ansprüche 1 bis 8,
dadurch gekennzeichnet, daß eine Überwachungseinrichtung (56) vorgesehen ist zur Überwachung eines Über- oder Unterlaufens eines VBV-Speichers (57).

10.   Digitales Transcodiersystem nach einem der Ansprüche 1 bis 9,

**dadurch gekennzeichnet,** daß die zweite Bitrate (R2) unabhängig von einer Variabilität der ersten Bitrate (R1) konstant eingestellt ist.

11. Digitales Transcodiersystem nach einem der Ansprüche 1 bis 10,
**dadurch gekennzeichnet,** daß die Decodiereinrichtung (10) einen eingangsseitigen Eingangspuffer (11), einen nachgeschalteten VLD-Decodierer (12) und eine Dequantisierungsstufe (13) aufweist.

12. Digitales Transcodiersystem nach Anspruch 11,
**dadurch gekennzeichnet,** daß die Dequantisierungsstufe (13) und die Quantisierungsstufe (21) durch eine gemeinsame Stufe (40) ersetzt sind, in welcher eine Requantisierungsformel berechnet wird gemäß

$$QF_{neu}[v][u] = QF_{alt}[v][u] \cdot \frac{qs_{alt}}{qs_{neu}}.$$

wobei qs**...** für alte und neue Quantisierungsfaktor und QF**...** für DCT-Koeffizienten in den Datenbitströmen (R1, R2) steht.

13. Digitales Transcodiersystem nach Anspruch 12,
**dadurch gekennzeichnet,** daß die gemeinsame Stufe (40) einen Multiplizierer (41) aufweist, dem der Wert $QF_{alt}$[v][u} aus dem VLD-Decodierer (12) sowie der Quotient $qs_{alt}$/$qs_{neu}$ zugeführt wird, und daß der Ausgang des Multiplizierers (41) über eine Float-/Integer-Stufe (42) mit dem Eingang des VLC-Codierers (22) in Verbindung steht.

14. Digitales Transcodiersystem nach Anspruch einem der Ansprüche 1 bis 13,
**dadurch gekennzeichnet,** daß der VLC-Codierer (22) die unveränderten Bewegungsdaten aus dem eingangsseitigen Datenbitstrom (R1) in den transcodierten Bitstrom einfügt.

15. Digitales Transcodiersystem nach Anspruch einem der Ansprüche 1 bis 13,
**dadurch gekennzeichnet,** daß es an einen optischen Bus einer Kommunikationsanlage insbesondere eines Kfz gekoppelt ist.

16. Verwendung eines digitales Transcodiersystem nach einem der Ansprüche 1 bis 15 in einem digitalen Videoaufzeichnungssystem zur Aufzeichnung von digitalen Daten auf einem Speichermedium (80) mit einem Datenbitstrom konstanter Bitrate (R2), die von der Bitrate des empfangenen Datenbitstromes (R1) unabhängig ist.

17. Verwendung nach Anspruch 16,
**dadurch gekennzeichnet,** daß parallel zum Transcodiersystem mittels Schalteinrichtung (71) eine Durchgangsleitung (72) schaltbar ist, um den empfangenen Datenbitstrom (R1) unverändert auf das Speichermedium (80) aufzuzeichnen.

18. Verwendung nach einem der Ansprüche 16 oder 17,
**dadurch gekennzeichnet,** daß das Transcodiersystem (4) in einem Wiedergabemodus als Decodiersystem eingesetzt ist.

19. Verwendung nach einem der Ansprüche 16 bis 18,
**dadurch gekennzeichnet,** daß der empfangene Datenbitstrom (R1) ein Videobitstrom und insbesondere ein DVD-Videobitstrom nach dem MPEG-2-Videostandard ist.

**FIG 1**

| DVD-Laufwerk (2) | → | Transcodierer (4) | → | Optischer Bus (6) | → | MPEG-2-Decodierer (8) |

- MPEG-2-Videobitstrom
- Videobitstrom besitzt eine Bitrate von bis zu 9,8 Mbit/s
- Konstante Bitrate (CBR)
- Variable Bitrate (VBR)

- MPEG-2-Videobitstrom
- Videobitstrom besitzt eine niedrige Bitrate (z. B. 3 bis 4 Mbit/s)
- Konstante Bitrate (CBR)

EP 1 087 622 A2

FIG 2

EP 1 087 622 A2

FIG 3

FIG4

## FIG 5

Quantisierungsfaktor QS

Quantisierungsfaktoren im Eingangsbitstrom

Quantisierungsfaktoren im transcodierten Bitstrom

QS

14

12

10

8

6

4

2

114000    114500    115000    115500    116000

Makroblock-Nr.

## FIG 6

Datenmenge D pro Bild

Eingangsbitstrom

Transcodierter Bitstrom

D

700000

600000

500000

400000

300000

200000

100000

0

0    20    40    60    80    100    120    140

Bild-Nr. (codierte Bildreihenfolge)

## FIG 7

PSNR der Testsequenz "Susie"

PSNR, bildweise ———
PSNR, Mittelwert ———

PSNR

Bildnummer

## FIG 8

FIG 9